# EUROPEAN PATENT APPLICATION

(11) **EP 1 605 161 A2**
(43) Date of publication of application: **14.12.2005**
(21) Application number: 05012032.8
(22) Date of filing: 03.06.2005
(51) Int. Cl.: F04B 27/18, F04B 49/22

(54) **Control valve for variable displacement compressor**

(30) Priority: 11.06.2004 JP 2004174154
(71) Applicant: TGK COMPANY, LTD., Tokyo 193-0942 (JP)
(72) Inventor: Hirota, Hisatoshi, Hachioji-shi Tokyo 193-0942 (JP)
(74) Representative: Grünecker, Kinkeldey, Stockmair & Schwanhäusser Anwaltssozietät

(57) **Abstract**

A control valve for a variable displacement compressor includes a main valve 20 for the passage cross-sectional area of passage substantially constant when refrigerant flows between a discharge chamber and an outlet port of the compressor, and for closing the passage due to an inversion of the magnitudes of pressure across the cross-sectional area-fixed passage when the compressor does not operate, a pilot valve 21 controlling the flow rate between the discharge chamber and the crankcase in a manner interlocked with the differential pressure across the cross-sectional area-fixed passage received by the main valve 20, and a solenoid 22 for setting the valve lift of the pilot valve 21. The pilot valve 21 controls the flow rate to the crankcase so as to make the differential pressure across the cross-sectional area-fixed passage constant, and to maintain the flow rate to the compressor outlet port constant.

## Description

The invention relates to a control valve according to the preamble of claims 1 and 15.

In a known variable displacement compressor obtaining an adequate cooling capacity without being constrained by the speed of the driving engine, e.g. in an automobile, a wobble plate (swash plate) on a shaft driven by the engine is connected to pistons within a crankcase. The relative inclination angle of the wobble plate can be varied to vary the compressor capacity, i.e. the refrigerant discharge amount. To change the inclination angle part of compressed refrigerant is introduced into the crankcase to control the crankcase pressure. The balance of pressures acting on the pistons is changed to continuously change the inclination angle of the wobble plate. The crankcase pressure is controlled by a control valve disposed in a refrigerant passage either between a refrigerant discharge chamber and the crankcase or between the crankcase and a suction chamber. The control valve maintains a predetermined value of the differential pressure. The differential pressure can be set by externally changing a value of a control current supplied to a solenoid of the control valve. When the engine speed rises, the crankcase pressure is increased to reduce the compression volume. When the engine speed decreases the crankcase pressure is reduced to increase the compression volume. The discharge amount of the compressor is maintained constant.

A known control valve for controlling a constant refrigerant discharge flow rate (JP-2004-116349 and EP 1 403 516 A) includes a cross-sectional area variable passage and a solenoid. The flow rate from the discharge chamber to the crankcase is controlled such that the differential pressure across the cross-sectional area variable passage equals a predetermined value. By the predetermined value, the flow rate through the variable orifice is controlled to be constant. The known control valve includes a first control valve for varying the passage cross-sectional area, a solenoid section for setting the passage cross-sectional area according to changes of external conditions, and a second control valve for sensing the differential pressure occurring across the first control valve and for controlling the crankcase pressure such that the differential pressure equals the predetermined value. The first control valve for high-pressure refrigerant is controlled by the solenoid section. Due to the high pressure it is sometimes difficult to rapidly and/or precisely adjust the large passage cross-sectional area. The overall construction has to be complicated. Moreover, in the compressor, a large differential pressure occurs between operation and stoppage. When the compressor switches from the operating state into the non-operating state, pressure corresponding to the high differential pressure instantaneously returns to the discharge chamber. When then operation is resumed, the compressor starts compression without the high differential pressure, which degrades the operating efficiency. To prevent that refrigerant returns during the stoppage state, a separate check valve has to be provided at the outlet of the compressor. This check valve and its structural integration increase the cost of the compressor.

It is an object of the invention to provide a control valve which has a simple construction and is capable of providing the function of a check valve.

This object is achieved by the features of claims 1 and 15.

In the control valve the pilot valve is responsive to a change of the differential pressure across the cross-sectional area-fixed passage caused by a change in the flow rate through the main valve, for controlling the flow rate to the crankcase, to thereby control the differential pressure across the main valve to be constant. When the flow rate through the main valve changes, the pilot valve controls the flow rate to the crankcase in a direction of reducing the variation of the differential pressure across the cross-sectional area-fixed passage, thereby controlling the flow rate through the main valve to be constant. Immediately after the solenoid is de-energized, the magnitude of a pressure difference is inverted across the main valve such that then the main valve functions as a check valve and closes. The pressure at the second port is maintained and does not drop to advantageously shorten the rise or start-up time of the compressor when it is restarted and until it again operates effectively.

In the control valve the solenoid does not control the main valve to change the passage cross-sectional area but sets the valve lift of the pilot valve which has a smaller valve cross-sectional area than the main valve. The smaller cross-sectional area of the pilot valve results in smaller force when the solenoid has to overcome when operating the pilot valve. This provides a more stable flow rate control. The main valve and the pilot valve operate in a manner interlocked with each other, which is advantageous in that the flow rate control can be realized by a very simple construction. Since the main valve by structure operates with a check valve function and is lifted only depending on the flow rate in the one flow direction toward the outlet port it is possible to dispense with a separate check valve at the compressor outlet port. This reduces the cost of the compressor.

Embodiments of the invention will be described with reference to the drawings showing control valves e.g. applied to a variable displacement compressor of a clutchless type, meaning that the compressor is directly connected to the engine of the automotive vehicle. Furthermore, the compressor may be a fixed flow rate control type in which the discharged flow rate is controlled to be constant.

In the drawings:
- Fig.1: is a cross-section of a conceptual configuration of a variable displacement compressor;
- Fig. 2: is a cross-section of a first embodiment of a control valve for a variable displacement compressor, in a de-energized stated;

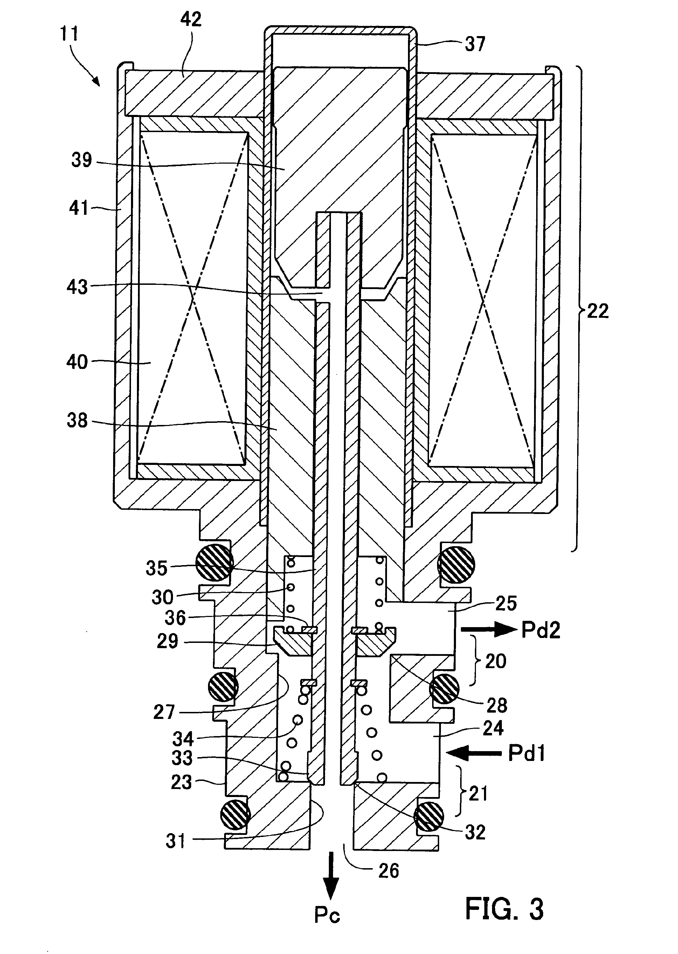

- Fig. 3: is a cross-section of the first embodiment, in a state where the compressor is controlled to its maximum capacity;
- Fig.4: is a cross-section of the first embodiment, in a state where the compressor is subjected to variable displacement control;
- Fig. 5: is a cross-section of the first embodiment, in a state where the compressor is controlled to its minimum capacity;
- Fig. 6: is a cross-section of a second embodiment of the control valve, in a de-energized state,
- Fig. 7: is a cross-section of a third embodiment of the control valve, in a de-energized state;
- Fig. 8: is a cross-section of a fourth embodiment of the control valve, in a state where the compressor is subjected to variable displacement control;
- Fig. 9: is a cross-section of a fifth embodiment of the control valve, in a state where the compressor is subjected to variable displacement control;
- Fig. 10: is a cross-section of a sixth embodiment of the control valve, in a state where the compressor is subjected to variable displacement control;
- Fig. 11: is a cross-section of a seventh embodiment of the control valve, in a state where the compressor is subjected to variable displacement control; and
- Fig. 12: is an expanded cross-section showing a main valve element used in the seventh embodiment.

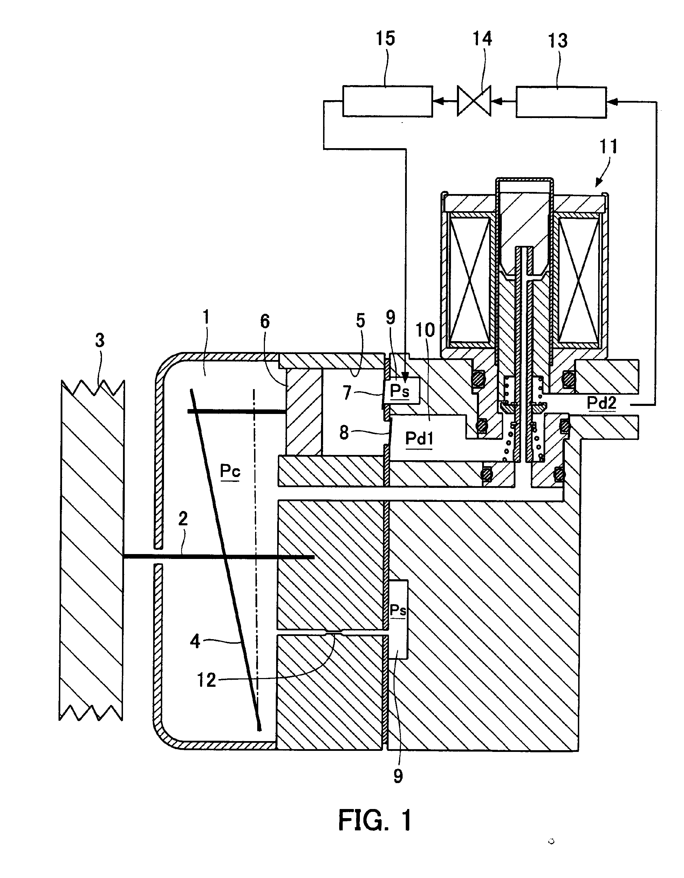

The variable displacement compressor in Fig. 1 includes a crankcase 1 and a shaft 2. One end of the shaft 2 carries a pulley 3 which receives a drive force from the engine of an automotive vehicle. The shaft 2 is equipped with a tiltable wobble plate 4 the relative inclination angle of which can be varied. Cylinders 5 (one of which is shown in Fig. 1) are arranged around the shaft 2. Each cylinder 5 contains a piston 6 for converting the rotating and wobbling motion of the wobble plate 4 into reciprocation. The cylinder 5 is connected via a suction relief valve 7 and a discharge relief valve 8 to a suction chamber 9 and a discharge chamber 10. A control valve 11 is provided between the discharge chamber 10 and an outlet port, and also between the discharge chamber 10 and the crankcase 1. An orifice 12 is provided between the crankcase 1 and the suction chamber 9.

The outlet port communicates with the discharge chamber 10 and is connected via a high-pressure refrigerant line to a condenser 13, from which piping extends to an inlet port communicating via an expansion valve 14, an evaporator 15, and a low-pressure refrigerant conduit line with the suction chamber 9.

The rotating shaft 2 drives the wobble plate 4 causing each piston 6 to reciprocate parallel to the axis of the shaft 2. Refrigerant at suction pressure Ps is drawn from the suction chamber 9 into the cylinder 5, is compressed, and is discharged at discharge pressure Pd1 into the discharge chamber 10. High-pressure refrigerant in the discharge chamber 10 is decompressed to a discharge pressure Pd2 when passing through the control valve 11, and is then delivered from the outlet port to the condenser 13. A part of the high-pressure refrigerant is introduced via the control valve 11 into the crankcase 1. The crankcase pressure Pc rises and sets the inclination angle of the wobble plate 4 such that the bottom dead centre of the piston 6 is brought to a position where the cylinder pressure and the crankcase pressure Pc are balanced. Thereafter, refrigerant returns from the crankcase 1 via the orifice 12 to the suction chamber 9.

The control valve 11 detects the differential pressure (Pd1 - Pd2) generated across a refrigerant passage having a set predetermined cross-sectional area, and introduces refrigerant into the crankcase 1 at a flow rate dependent on the detected differential pressure. This controls a constant flow rate of the refrigerant sent from the discharge chamber 10 to the condenser 13.

When the engine speed increases, the suction pressure Ps lowers, and the discharge pressure Pd1 rises. This increases the flow rate via the control valve 11 between the discharge chamber 10 and the condenser 13 and increases the differential pressure (Pd1 - Pd2) across the control valve. The flow rate to the crankcase 1 also increases, whereby, finally the crankcase pressure Pc increases as well. The wobble plate 4 is adjusted at a at right angle relative to the shaft 2 to decrease the pistons strokes, which acts on the compression capacity in a reducing direction to reduce the discharge flow rate. Thus, even when the discharge flow rate is about to increase due to an increase of the engine speed, the control valve 11 increases the flow rate to the crankcase 1 according to the flow rate increase, whereby the crankcase pressure Pc is increased to reduce the discharge capacity. Therefore, the discharged flow rate of the compressor is controlled to be constant.

When the engine speed decreases, the flow rate via the control valve 11 and between the discharge chamber 10 and the condenser 13 will decrease as well to decrease the differential pressure (Pd1 - Pd2) across the control valve 11. The flow rate to the crankcase 1 also decreases such that the crankcase pressure Pc is lowered. The discharge flow rate then is increased such that the discharge flow rate is controlled to be constant.

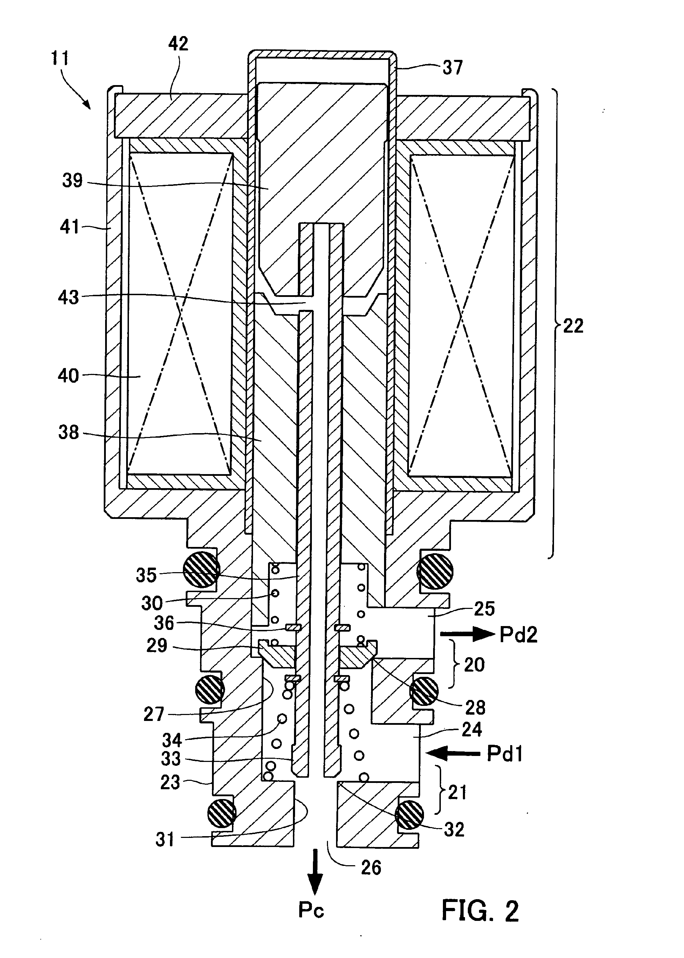

The control valve 11 shown in Fig. 2 has, in a coaxial arrangement, a main valve 20, a pilot valve 21, and a solenoid 22, in a body 23. The body 23 has three ports 24, 25 and 26 (refrigerant outlets and an inlet of the main valve 20 and the pilot valve 21). In the compressor, the port 24 communicates with the discharge chamber 10 (discharge pressure Pd1). The port 25 communicates with the compressor outlet port (discharge pressure Pd2). The port 26 communicates with the crankcase 1 (controlled pressure Pc).

The body 23 is formed with a refrigerant passage 27 between the ports 24, 25. A main valve seat 28 of the main valve 20 has the refrigerant passage 27 as a valve hole. Downstream of the valve seat 28, a main valve element 29 is movably disposed. A spring 30 having a weak spring force is disposed in a space communicating with the port 25 for urging the main valve element 29 in valve-closing direction toward the main valve seat 28. The main valve 20 has a check valve structure for blocking in flow direction from port 25 to port 24.

The body 23 is also formed with a refrigerant passage 31 between the ports 24, 26. One end of the refrigerant passage 31 toward the port 24 forms a valve seat 32 of the pilot valve 21, using the refrigerant passage 31 as a valve hole. Upstream of the valve seat 32, a valve element 33 is movably disposed, thereby forming a poppet valve with the valve seat 32. A spring 34 in a space communicating with the port 24 urges the valve element 33 in valve-opening direction.

The valve element 33 has a hollow cylindrical shape, and is integral with a drive shaft 35 of the solenoid 22. The drive shaft 35 extends through an axial through hole of the main valve element 29, such that the main valve element 29 is axially movably held and guided on the drive shaft 35. A stop ring 36 on the drive shaft 35 defines a stopper member.

When the main valve element 29 is lifted from the main valve seat 28, the main valve element 29 will be stopped by the stop ring 36 so as to set the main valve 20 to a cross-sectional area-fixed passage having a predetermined cross-sectional area. The stop ring 36 is positioned approximately at an intermediate position within the stroke range of the drive shaft 35 when the pilot valve 21 is operating within a certain control range. The location of the stop ring 36 is set such that the main valve element 29 is stopped by the stop ring 36 at such a lift position that the main valve 20 then will be open with the predetermined cross-sectional area. During performance of the control valve 11 in the main valve 20, the passage cross-sectional area defined by the gap between the main vale seat 28 and the main valve element 29 is held approximately constant, because during a control operation of the pilot valve 21 any changes of the passage cross-sectional area of the main valve 20 with respect to the stroke of the pilot valve element 33 are very small. As a consequence, it is possible to consider that the passage cross-sectional area of the main valve 20 remains substantially constant. When refrigerant flows through the main valve 20, the main valve element 29 will be stopped at the stop ring 36 such that then the main valve element 29 moves in unison with the valve element 33 of the pilot valve 21. A flow rate change in the main valve 20 having the passage cross-sectional area set to be substantially constant causes a change of the differential pressure across the main valve 20. The main valve element 29 senses the change of the differential pressure and axially displaces itself. The displacement of the main valve element 29 sets the axial displacement of the valve element 33 of the pilot valve 21.

The solenoid 22 has a bottomed sleeve 37. An open end of the sleeve 37 is hermetically fixed to the body 23. A core 38 is fitted into the opening of the bottomed sleeve 37. The core 38 has an axial through hole and axially movably guides the drive shaft 35. A plunger 39 within the bottomed sleeve 37 is movable to and away from the core 38. An upper end of the drive shaft 35 (Fig. 2) is fitted in the plunger 39. Via the drive shaft 35 the plunger 39 is urged by the spring 34 of the pilot valve 21 in a direction away from the core 38. A coil 40 surrounds the bottomed sleeve 37. The coil is surrounded by a yoke 41 integrally formed with the body 23. Between the yoke 41 and the plunger 39 an annular plate 42 is provided for closing a magnetic circuit.

The hollow drive shaft 35 is connected to the plunger 39 and has a lateral hole 43 such that the inside of the bottomed sleeve 37 closed by the core 38 and the refrigerant passage 31 on the downstream side of the pilot valve 21 communicate with each other. The controlled pressure Pc equally acts on the axially opposite ends of the valve element 33 and the drive shaft 35, respectively, thereby enabling the solenoid 22 to control the pilot valve 21 without being adversely affected by the controlled pressure Pc.

When the solenoid 22 is in a de-energized state, i.e., when the automotive air conditioner is in a non-operating state, the main valve 20 is fully closed by the urging force of the spring 30. The pilot valve 21 is fully opened by the spring 34. All the discharged refrigerant is always introduced via the pilot valve 21 into the crankcase 1 which places the compressor in the minimum capacity operating state. Then the discharged flow rate is very small, so that the discharge pressure Pd1 is small and not large enough to push open the main valve element 29 against the spring 30.

Fig. 2 also shows a state immediately after the air conditioner is switched from an operating state into the non-operating state. When the automotive air conditioner is in operation, and the solenoid 22 is energized, the plunger 39 of the solenoid 22 is attracted to the core 38. The drive shaft 35 is pushed downward to either fully close the pilot valve 21 or control the valve lift of the pilot valve. Therefore, the compressor is operating in a variable displacement range, and hence discharge pressure Pd1 from the discharge chamber 10 is introduced into the port 24. At this time, the main valve element 29 is lifted from the main valve seat 28 by the discharge pressure Pd1, and refrigerant decompressed to discharge pressure Pd2 is delivered from the port 25. In this state, when the automotive air conditioner stops operation, the discharge pressure Pd1 sharply decreases to invert the relationship between the discharge pressure Pd1 at the port 24 and the discharge pressure Pd2 at the port 25. The refrigerant at discharge pressure Pd2, having been sent from the port 25, is about to flow upstream, but, as shown in Fig. 2, then the main valve 20 is fully closed by the discharge pressure Pd2, such that the high discharge pressure Pd2 is maintained at the port 25. Therefore, when the automotive air conditioner is re-started, a rise time required until the discharge pressure Pd1 recovers to the maintained high discharge pressure Pd2 is shortened.

When the automotive air conditioner starts operation, the control valve 11 controls the compressor to maximum capacity. Control current corresponding to the maximum capacity is supplied to the solenoid 22. The plunger 39 is attracted to the core 38, and moved downward to seat the valve element 33 on the valve seat 32 to fully close the pilot valve 21.

The flow rate to the crankcase 1 is reduced to zero. The compressor starts maximum capacity operation. Discharge pressure Pd1 from the discharge chamber 10 is introduced into the port 24 and lifts the main valve element 29 from the main valve seat 28, passes through a gap (passage having a constant cross-sectional area) between the main valve element 29 and the main valve seat 28, and is delivered from the port 25 while being decompressed to discharge pressure Pd2. At this time, the main valve element 29 is stopped by the stop ring 36, and the passage cross-sectional area of the gap between the main valve element 29 and the main valve seat 28 is fixed.

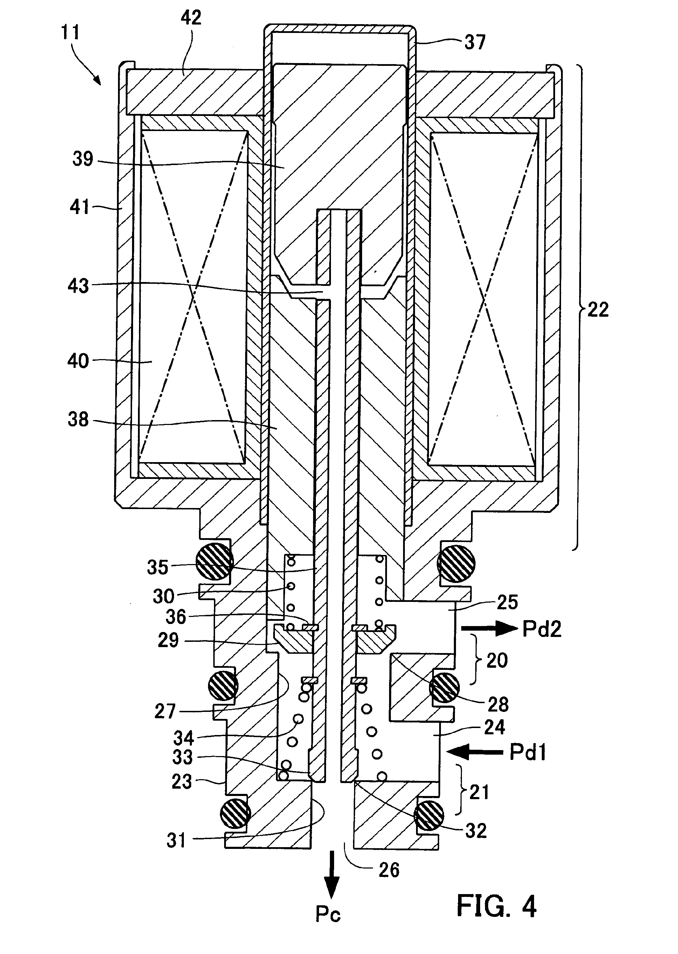

When the cooling load on the automotive air conditioner decreases, control current dependent on the cooling load is supplied to the solenoid 22. The plunger 39 moves by the spring 34 away from the core 38. In accordance with the plunger movement, the pilot valve 21 is set to a valve lift dependent on the control current (Fig. 4). The pilot valve 21 decompresses refrigerant introduced into the port 24 at discharge pressure Pd1, to the pressure Pc, and supplies the refrigerant from the port 26 to the crankcase 1 at a flow rate dependent on the valve lift.

When the discharge capacity of the compressor is increased e.g. due to increasing engine speed, the discharge pressure Pd1 increases to increase the differential pressure (Pd1 - Pd2) across the main valve 20. A force tending to push open the main valve element 29 is increased and tends to further lift the main valve element 29 which abuts at the stop ring 36. When the main valve element 29 then is lifted further the valve element 33 of the pilot valve 21 is also lifted in a manner interlocked with the lift of the main valve element 29. This increases the flow rate to the crankcase 1, so that the compressor operates in a direction of reducing the discharge capacity and to lower the discharge pressure Pd1 to thereby restore the differential pressure across the main valve 20 to its original value. Inversely, when the discharge capacity of the compressor decreases e.g. due to an engine speed decrease, the compressor operates in a direction of increasing the discharge capacity to restore the differential pressure across the main valve 20 to its original value. The control valve 11 controls a constant discharge compressor flow rate.

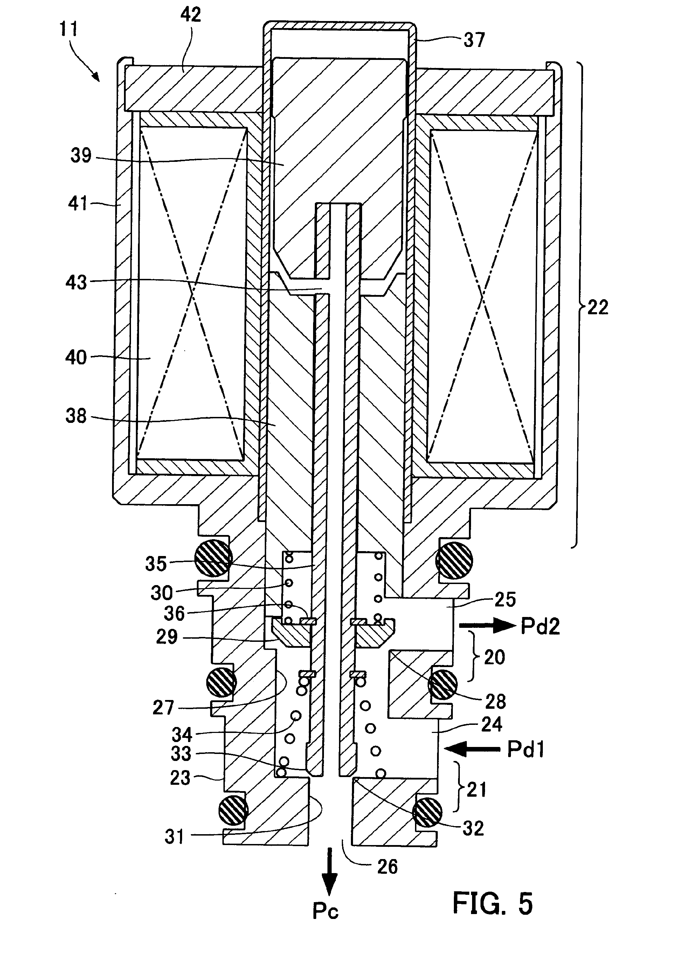

When the cooling load on the automotive air conditioner becomes sufficiently low, the control current dependent on the sufficiently low cooling load is supplied to the solenoid 22 of the control valve 11. The solenoid 22 (Fig. 5) sets the valve lift of the pilot valve 21 to the maximum or to the vicinity of maximum, to set the flow rate from the port 26 to the crankcase 1 to the maximum or to the vicinity of the maximum. The compressor is controlled to the minimum discharge capacity or the vicinity of the minimum discharge capacity.

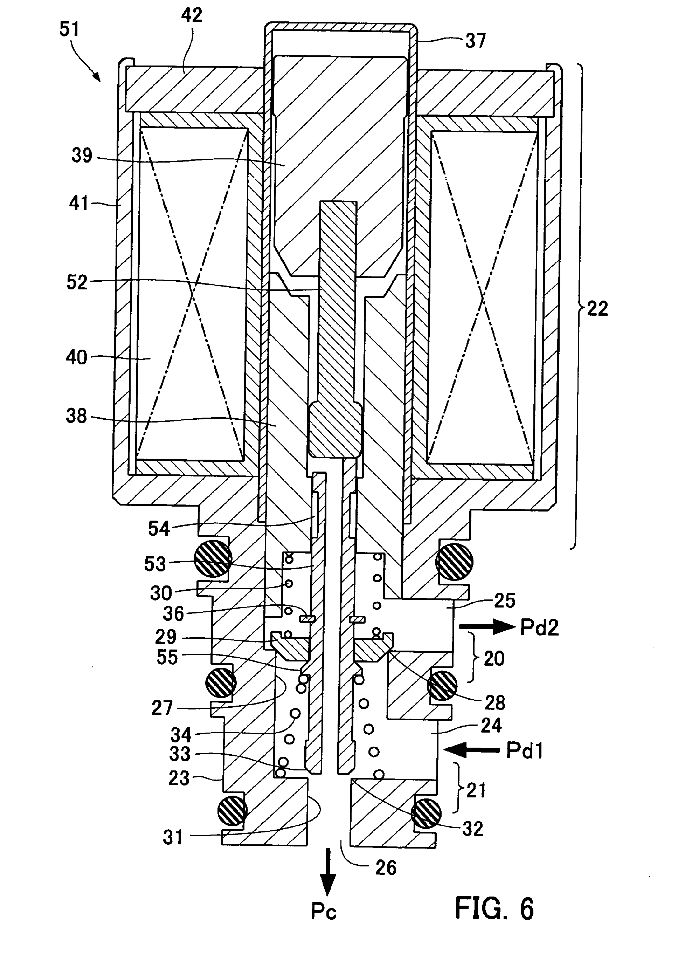

The control valve 51 (second embodiment in Fig. 6) differs from the first embodiment by a modified structure of the drive shaft 35 of the solenoid 22. In the control valve 51, the solenoid 22 has a first drive shaft 52 one end of which is fitted in the plunger 39. The other end is slidably guided in a cylinder bore of the core 38. The core 38 also movably holds and guides a hollow cylindrical second drive shaft 53 which is integral with the valve element 33 of the pilot valve 21. By the division of the drive portion of the solenoid 22 into the first and second drive shafts 52, 53 some misalignments between the main valve 20 and the pilot valve 21 can be tolerated.

The second drive shaft 53 has a peripheral groove 54 which is located inside the core 38. The groove 54 has to prevent that high-pressure refrigerant at discharge pressure Pd2 may leak through a possible clearance between the second drive shaft 53 and the core 38 into the bottomed sleeve 37, where via the hollow part of the second drive shaft 53 the pressure equals the pressure Pc at the port 26.

The second drive shaft 53 holds and axially movably guides the main valve element 29. Therefore, when the relationship is inverted between the discharge pressure Pd1 and the discharge pressure Pd2 which was lower than the discharge pressure Pd1, e.g. immediately after the automotive air conditioner has stopped operation, the main valve 20 will function as a check valve. However, then refrigerant at pressure Pd2 sometimes may leak upstream through a clearance between the second drive shaft 53 and the main valve element 29. To eliminate this inconvenience, the second drive shaft 53 has an integral protrusion 55 below the main valve element 29. The protrusion is radially thicker than the bore of the main valve element 29 and has a sealing face opposed to the main valve element 29. The sealing face has tapered shape. The protrusion 55 also may serve as a stopper for the spring 34 urging the second drive shaft 53 toward the first drive shaft 52. When the main valve element 29 is seated on the main valve seat 28 by the discharge pressure Pd2, since the second drive shaft 53 is urged upward (Fig. 6) by the spring 34, the protrusion 55 functions as a stop valve when abutting at the main valve element 29 to close the clearance between the second drive shaft 53 and the bore in the main valve element 29.

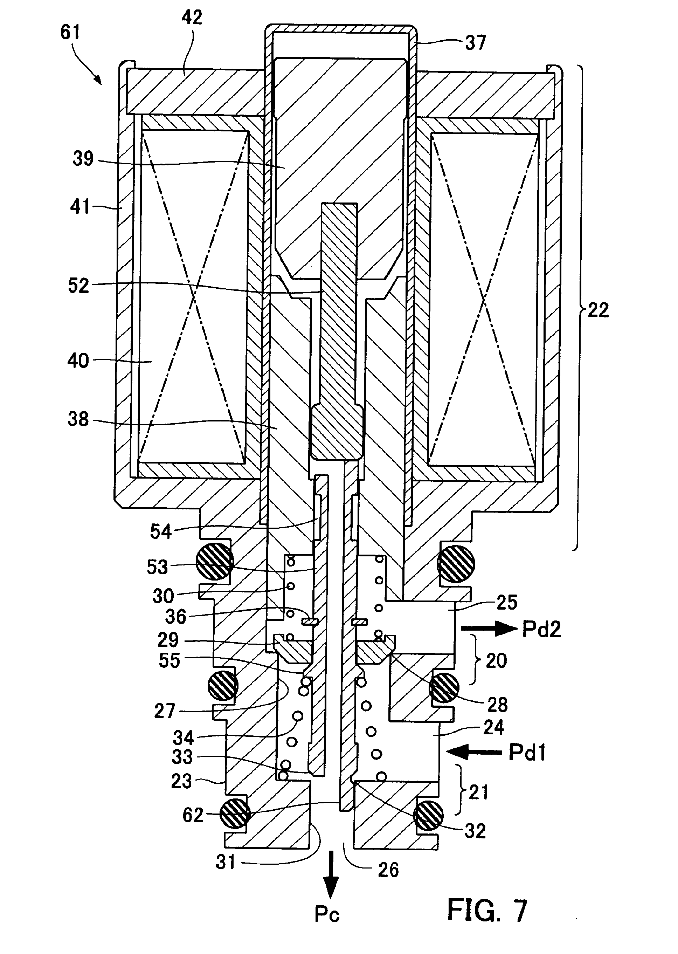

The control valve 61 in Fig. 7 differs from the second embodiment in that operations of the main valve 20 and the pilot valve 21, including the second drive shaft 53, are made more stable. Guides 62 are integrally formed at the lower end of the valve element 33 of the pilot valve 21. The guides 62 (e.g. three in total) are arranged around a pressure-equalizing hole formed through the foremost end of the valve element 33 such that the outer periphery of each guide 62 is in sliding contact with the inner wall of the valve hole of the pilot valve 21. The second drive shaft 53 is guided at one end by the core 38, and is also guided via the guides 62 by the valve hole of the pilot valve 21. The arrangement assures the coaxial status between the main valve element 29 and the valve element 33 of the pilot valve 21 during operation even if lateral loads should be applied to by the flow of high-pressure refrigerant.

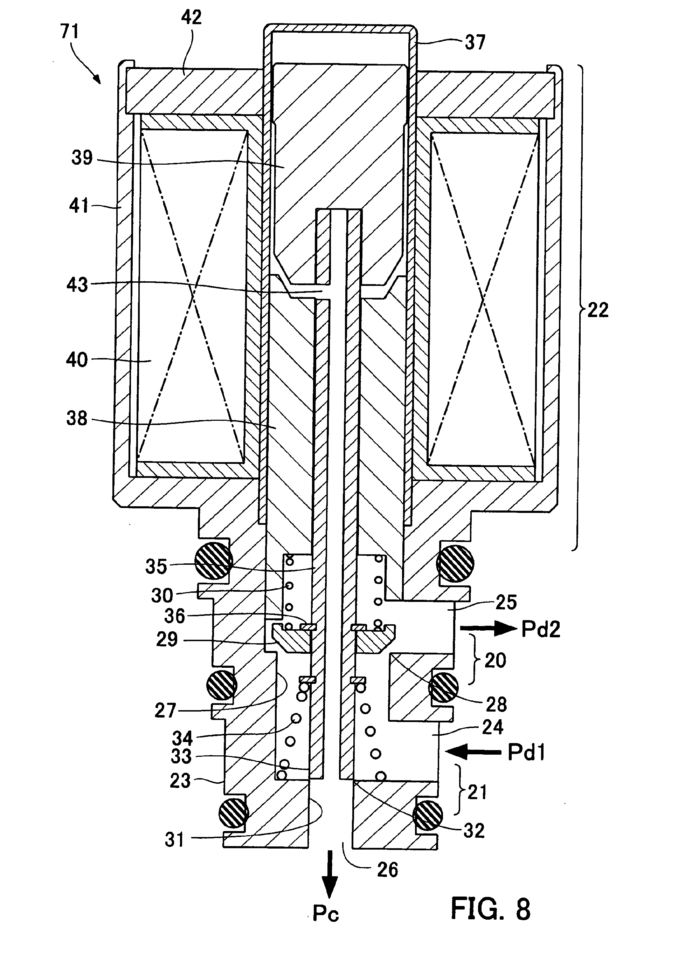

The control valve 71 in Fig. 8 differs from the first embodiment by a modified structure of the pilot valve 21. The drive shaft 35 and the valve element 33 of the pilot valve 21 are formed by a straight pipe. The outer pipe diameter s close to the inner diameter of the valve hole of the pilot valve 21 such that the valve element 33 can be inserted in and removed from the valve hole of the pilot valve 21. The pilot valve 21 functions as a slide valve. When the compressor is controlled to the maximum capacity, e.g. when the automotive air conditioner has been started, the pilot valve 21 is fully closed by the valve element 33 inserted into the valve hole. Further, when the compressor is subjected to variable displacement control, the pilot valve 21 is set to a predetermined valve lift by having the valve element 33 removed from the valve hole.

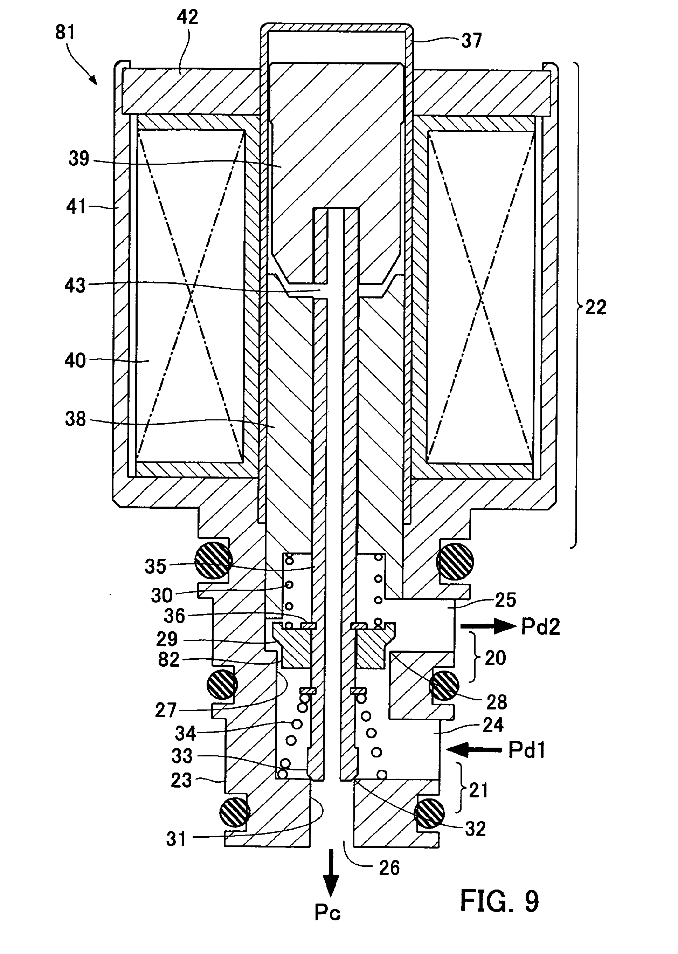

In the control valve 11 in Fig. 1 the valve lift of the pilot valve 21 is controlled by the solenoid 22, and the valve lift of the main valve 20 is more or less changed to slightly change the passage cross-sectional area of the main valve 20. Differently, in the control valve 81 in Fig. 9, the passage cross-sectional area of the main valve 20 is completely fixed to be constant. The main valve element 29 has a concentrically shaped extended integral portion 82 which always partially will remain positioned in the valve hole. Between the periphery of the extended portion 82 and the inner periphery of the valve hole, there is formed a passage which has a cross-sectional area which is not varied when the main valve element 29 is moved axially. Therefore, during variable displacement control of the compressor, the main valve 20 functions as a cross-sectional area-fixed passage which is unchangeable in cross-sectional area. When the magnitude of pressure of refrigerant is inverted across the main valve 20 as e.g. of immediately after the automotive air conditioner has stopped operation, the main valve 20 again functions as a check valve.

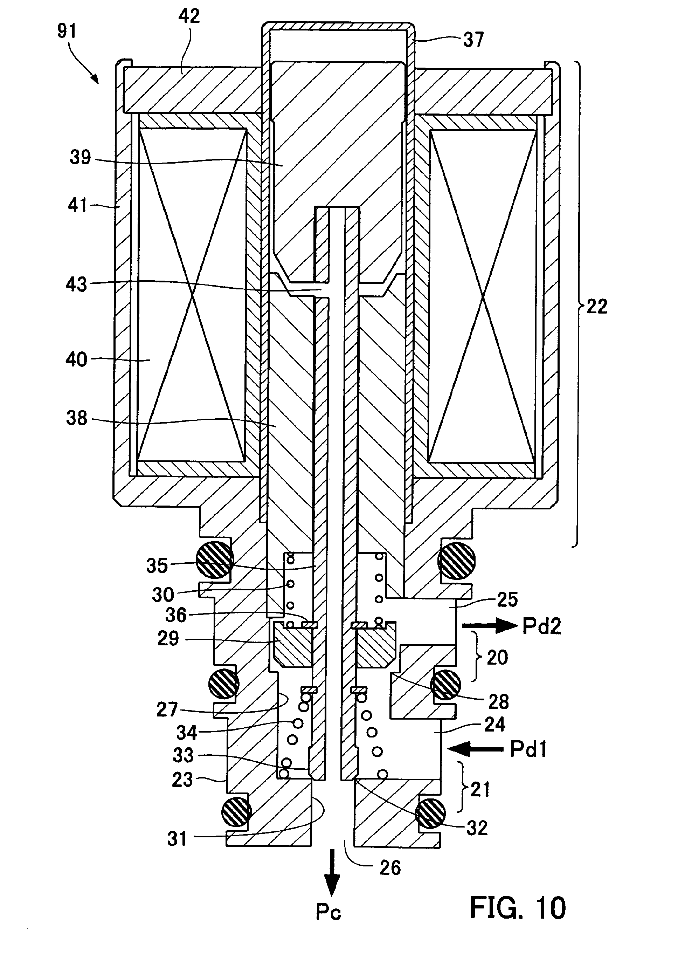

In the control valve 81 the cross-sectional area-fixed passage of the main valve 20 is formed on the upstream side of the main valve seat 28. Differently, in the control valve 91 in Fig. 10 the cross-sectional area-fixed passage of the main valve 20 is formed on the downstream side of the main valve seat 28. In the control valve 91, the main valve element 29 has an axially long shape, and is configured such that a passage of a predetermined cross-sectional area is formed between the periphery of the main valve element 29 and the inner periphery of a cylindrical passage section containing the main valve element 29. As a result, in the main valve 20, refrigerant having passed through the gap between the main valve element 29 and the main valve seat 28 then has to pass through the cross-sectional area-fixed passage having the predetermined cross-sectional area.

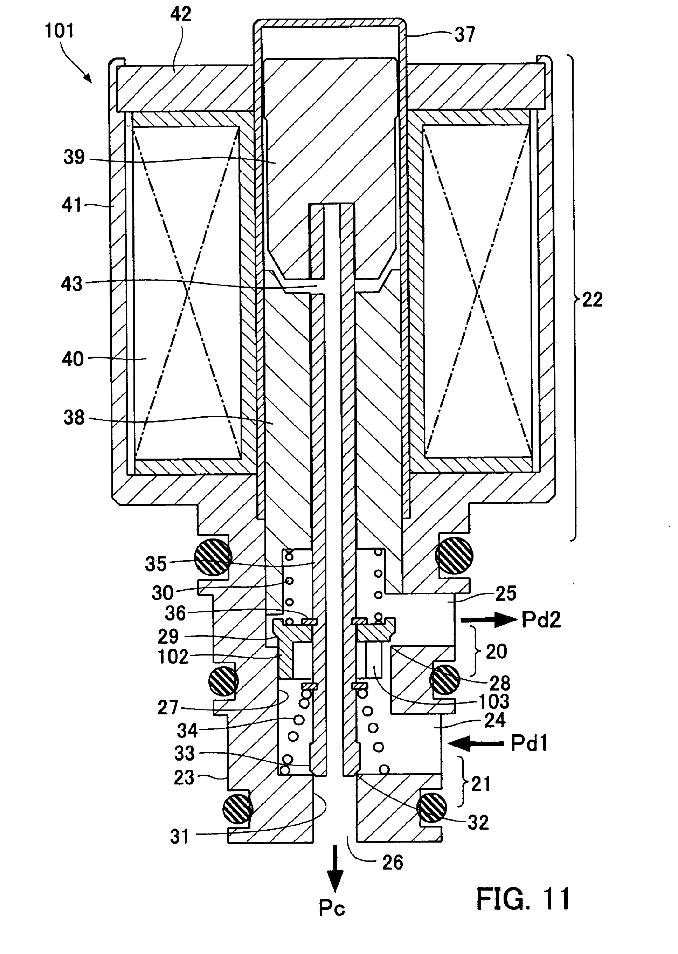

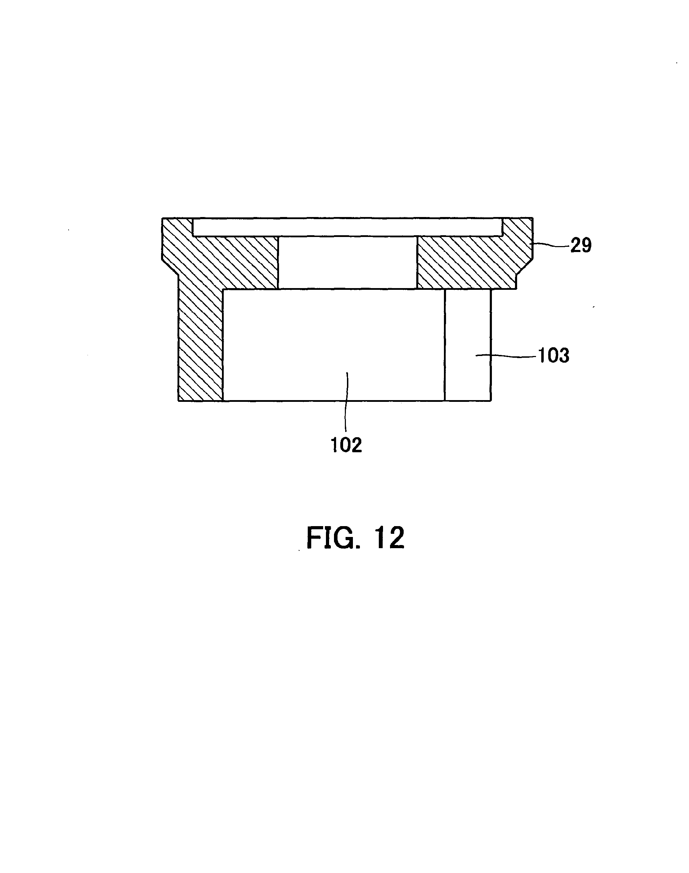

In the control valve 101 in Figs 11 and 12 the cross-sectional area-fixed passage is formed by a slit 103 in a skirt 102 of the main valve element 29. The main valve element 29 is integral with the skirt 102 which is axially slidable in the valve hole. The slit 103 in skirt 102 defines a passage the cross-sectional area of which does not change when the main valve element 29 moves axially. The main valve element 29 illustrated in FIG. 12, by way of example, has one slit 103 formed in the hollow cylindrical skirt 102. The skirt 102 extends downward from a tapered face by which the main valve element 29 co-acts with the main valve seat 28. The slit 103 is provided at a location downward of the tapered face of the main valve element 29, as viewed in FIG. 12. Of course, there may be formed a plurality of slits 103 along the circumference of the skirt 102.

Since the skirt 102 is axially slidably fitted in the valve hole of the main valve 20, the main valve element 29 will not wobble and the passage cross-sectional area defined by the slit 103 does not change even slightly even if lateral load is applied to the main valve element 29 by the flow of high-pressure refrigerant. Further, the main valve element 29 functions as a bearing to support the drive shaft 35, in order to guide the valve element 33 of the pilot valve 21 along the same axis of the valve seat 32 of the pilot valve 21.

In the embodiments, the solenoid may be disposed on the other axial side of the pilot valve 21 than shown.

## Claims

1. A control valve (11, 51, 61, 71, 81, 91, 101) for a variable displacement compressor and for controlling a refrigerant discharge flow rate of the compressor to a constant flow rate, **characterised by**:
a main valve (20) in a first refrigerant passage (27) between a first port (24) communicating with a compressor discharge chamber (10) and a second port (25) communicating with a compressor outlet port, the main valve being adjustable in response to a flow from the first to the second ports (24, 25) in valve-opening direction to set the first refrigerant passage (27) to a cross-sectional area-fixed passage having a predetermined passage cross-sectional area, the main valve being adjustable in valve closing direction to close when the flow rate is slight or zero;
a pilot valve (21) in a second refrigerant passage (31) between the first port (24) and a third port (26) communicating with a compressor crankcase (1) for controlling the flow rate from the first to the third port (24, 26) according to the differential pressure across the cross-sectional area-fixed passage; and
a solenoid (22) for adjusting a predetermined lift of the pilot valve (21) by an external signal.

2. The control valve according to claim 1, **characterised in that** the main valve (20) and the pilot valve (21) open in the same lifting direction and are arranged on the same axis, and that pilot valve (21) senses the differential pressure across the cross-sectional area-fixed passage based on a flow rate change through the main valve (20), to directly control the lift of the pilot valve (21).

3. The control valve according to claim 2, **characterised in that** the solenoid (22) is arranged on the same axis as the main valve (20) and that the pilot valve (21) is held in a fully-open state when the solenoid (22) is de-energized.

4. A control valve as in claim 1 or 2, **characterised in that**:
the main valve (20) has a main valve seat (28) formed in the first refrigerant passage (27), and a movable main valve element (29) downstream of the main valve seat (28), that the main valve element (29) is urged in valve-closing direction towards the main valve seat (28), and is lifted from the main valve seat (28) by a flow from the first to the second port (24, 25), for setting the first refrigerant passage to the cross-sectional area-fixed passage having the predetermined passage cross-sectional area;
that the pilot valve (21) has a valve seat (32) formed in the second refrigerant passage (31), and a movable valve element (33) upstream of the valve seat (32), that the valve element (33) is urged in valve-opening direction away from the valve seat (32), that the valve element (33) operates in a manner interlocked with the main valve element (29) when the main valve (20) is set to the cross-sectional area-fixed passage; and
that the solenoid (22), the main valve (20) and the pilot valve (21are disposed on the same axis.

5. The control valve according to claim 4, **characterised in that** the valve element (33) of the pilot valve (21) is integral with a shaft (35, 53) movably extending through a through hole in the main valve element (29) of the main valve (20), that the shaft (35, 53) has a stopper member (36) for abutment of the main valve element (29) when the main valve element (29) is lifted from the main valve seat (28) by the flow from the first to the second port (24, 25), to set the main valve (20) to the cross-sectional area-fixed passage by the co-action between the stopper member (36) and the main valve element (29).

6. The control valve according to claim 5, **characterised in that** the valve element (33) of the pilot valve (21), the shaft (35) and a drive shaft of the solenoid (22) are integral with each other.

7. The control valve according to claim 5, **characterised in that** the shaft (53) has a radially outward protruding protrusion (55) located at a side of the main valve element (29) facing the second passage (31) for closing the through hole of the main valve element (29) when the main valve (20) is closed.

8. The control valve according to claim 5, **characterised in that** the valve element (33) of the pilot valve (21) has at least one integral guide (62) formed as an axial extension of the valve element (33) such that the periphery of the guide (6) permanently is in sliding contact with an inner wall of the valve hole of the pilot valve (21).

9. The control valve according to claim 4, **characterised in that** the main valve element (29) of the main valve (20) has an axially extended portion (82), that the portion (82) permanently is positioned within the valve hole of the main valve (20), and that the cross-sectional area-fixed passage to which the main valve element is set is defined between the outer periphery of the extended portion (82) and the inner periphery of the valve hole of the main valve (20).

10. The control valve according to claim 4, **characterised in that** the main valve element (29) of the main valve (20) has a cylindrical skirt (102), that the skirt (102) is axially slidable in the valve hole of the main valve (20), and that the skirt has at least one slit defining the cross-sectional area-fixed passage (103) to which the main valve element (29) is set.

11. The control valve according to claim 4, **characterised in that** the main valve element (29) of the main valve (20) defines the cross-sectional area-fixed passage to which the main valve element is set between the outer periphery of the axially extended main valve element (20) and the inner periphery of a cylindrical bore permanently accommodating the main valve element (29), the cylindrical bore being formed in the first passage (27).

12. The control valve according to claim 4, **characterised in that** the pilot valve (21) is a poppet valve.

13. The control valve according to claim 4, **characterised in that** the pilot valve (21) is a slider valve consisting of the valve hole formed in the second passage (31) and of the valve element (33) which has a slightly smaller outer diameter than the inner diameter of the valve hole and which valve element (33) can be inserted into or removed from the valve hole.

14. The control valve according to at least one of claims 1 to 13, **characterised in that** the pressure receiving cross-sectional area of the pilot valve (21) is smaller than the pressure receiving cross-sectional area of the main valve (20).

15. A control valve (11, 51, 61, 71, 81, 91, 101) for a variable displacement compressor and for controlling a refrigerant discharge flow rate of the compressor to a constant flow rate, comprising:
a main valve (20) in a first refrigerant passage (27) between a first port (24) communicating with a compressor discharge chamber (10) and a second port (25) communicating with a compressor outlet port, the main valve (20) including a main valve member (29) and a main valve seat (28), and
a solenoid (22) to which selectively an external signal is supplied,
**characterised in that**
a pilot valve (21) is disposed in a second refrigerant passage (31) between the first port (24) and a third port (26) communicating with the compressor crankcase (1),
that the predetermined valve lift of the pilot valve (21) is set by the solenoid (22),
that the main valve (20) is adjustable in valve opening direction only by a flow from the first to the second port (24, 25),
and that the main valve (20) has a check valve function for blocking the first refrigerant passage (27) and holding the pressure (Pd2) at the second port (25) immediately after de-energizing the solenoid and with an inversion of the magnitude of a pressure difference across the main valve (20).
